**Europäisches Patentamt**

(19) **European Patent Office**

**Office européen des brevets**

(11) Numéro de publication: **0 114 544**
**B1**

(12) **FASCICULE DE BREVET EUROPEEN**

(45) Date de publication du fascicule du brevet:
22.04.87

(51) Int. Cl.⁴: **G 01 V 1/22**

(21) Numéro de dépôt: 83402372.3

(22) Date de dépôt: 08.12.83

(54) **Méthode pour la commande à distance d'appareils d'acquisition de signaux au moyen d'un voie de transmission à bande passante étroite et dispositif pour sa mise en oeuvre.**

(30) Priorité: **16.12.82 FR 8221284**

(43) Date de publication de la demande:
**01.08.84 Bulletin 84/31**

(45) Mention de la délivrance du brevet:
**22.04.87 Bulletin 87/17**

(84) Etats contractants désignés:
**DE GB IT NL**

(56) Documents cités:
**FR - A - 2 237 552**
**FR - A - 2 322 381**
**FR - A - 2 377 045**
**GB - A - 2 067 056**
**US - A - 3 916 371**
**US - A - 4 042 905**

(73) Titulaire: **INSTITUT FRANCAIS DU PETROLE, 4, Avenue de Bois-Préau, F-92502 Rueil-Malmaison (FR)**

(72) Inventeur: **Rialan, Joseph, 15, rue des Bigots, F-92190 Meudon (FR)**
Inventeur: **Thierry, Gérard, 7, avenue de la Grande Armée, F-75016 Paris (FR)**

ACTORUM AG

## Description

L'invention a pour objet une méthode pour la commande à distance d'appareils éloignés d'un poste de commande comportant l'utilisation d'une voie de transmission d'ordres à bande passante étroite dont le délai de transmission est prédéterminé, et un dispositif pour sa mise en œuvre.

La méthode selon l'invention a plus spécifiquement pour objet la commande à distance, depuis un système central de commande et d'enregistrement, d'appareils d'acquisition de données adaptés chacun à collecter des signaux reçus par exemple par un ou plusieurs récepteurs de signaux, à traiter ces signaux et à les enregistrer, cette méthode comportant l'utilisation d'une voie de transmission à bande passante étroite pour des ordres qui permettent l'acquisition de tous les signaux reçus postérieurement à un instant de référence choisi.

Une telle méthode est utile par exemple pour transmettre à des appareils d'acquisition éloignés l'instant de référence (TB) où l'on déclenche un générateur de signaux sismiques, de manière que ces appareils puissent commencer à recueillir les signaux fournis par des capteurs ou des groupes de capteurs sismiques répartis le long d'un profil sismique à explorer, en réponse aux échos sur les différentes couches réfléchissantes du sous-sol d'ébranlements communiqués au sol par le générateur, avant de les transmettre au système central de commande et d'enregistrement le plus souvent par radio. Un tel appareil d'acquisition est décrit dans la demande de brevet français no 2 511 772 publiée le 25 février 1983.

Pour éviter tout retard dans la transmission du signal définissant cet instant de référence (TB) et assurer l'initialisation des appareils d'acquisition antérieurement à l'arrivée des premiers échos, on peut utiliser par exemple une voie de transmission rapide.

Cette voie de transmission peut être par exemple le canal hertzien à large bande passante prévu pour la transmission au système central des données recueillies par les appareils d'acquisition. Dans ce cas, lorsque le signal indicatif de l'instant de référence a été transmis et reçu par les dispositifs d'émission-réception de radio associés aux différents appareils, il convient d'effectuer une commutation rapide entre les parties émettrices et réceptrices de ces dispositifs, ainsi qu'entre les parties correspondantes du dispositif émetteur-récepteur associé au système central, pour que les données sismiques recueillies puissent être transmises. Mais ce procédé présente des inconvénients, du fait que la commutation rapide des émetteurs et des récepteurs n'est pas facile à réaliser.

En outre, l'utilisation d'un autre canal hertzien à large bande passante pour la transmission du signal représentatif de l'instant de référence n'est pas toujours possible, compte tenu des restrictions apportées par les réglementations en matière de transmission par radio.

On connaît par la demande de brevet français 2 377 045 un système de transmission permettant de relier une pluralité des boîtiers d'acquisition sismique à un laboratoire central d'enregistrement. Le système de transmission décrit comporte deux voies de transmission différentes, l'une, la plus rapide pour le transfert de données et de commandes, l'autre à vitesse de propagation plus faible, pour le transfert des interrogations. Les ordres sont transmis sur les deux voies de telle manière qu'ils soient détectés par un boîtier concerné par ces ordres dans une relation temporelle déterminée. On obtient celle-ci en retardant l'émission sur la voie la plus rapide par rapport à celle effectuée sur la voie plus lente.

La méthode selon l'invention assure la commande à distance d'appareils d'acquisition de signaux depuis un poste de commande éloigné au moyen d'une voie de transmission d'ordres à bande passante étroite dont le délai de transmission $\tau$ est prédéterminé, de manière à permettre l'acquisition de signaux reçus postérieurement à un instant de référence choisi $t_1$.

La méthode selon l'invention se caractérise en ce qu'elle comporte la transmission sur ladite voie de transmission d'un premier signal de commande $S_i$ à un instant initial précédant l'instant de référence d'un intervalle de temps au moins égal au délai de transmission $\tau$, la réception du premier signal de commande déclenchant l'acquisition desdits signaux reçus, la transmission sur ladite voie de transmission d'un second signal de commande So à l'instant de référence choisi $t_1$ ce second signal étant reçu par les appareils d'utilisation à un instant ultérieur $t_2$ et la sélection parmi tous les signaux enregistrés par lesdits appareils d'utilisation, de ceux enregistrés à partir de l'instant $t_2-\tau$, et de ce fait postérieur à l'instant de référence choisi.

La méthode selon l'invention permet donc, en utilisant une voie de transmission à bande étroite et par conséquent à vitesse de transmission relativement lente, de commander l'acquisition et l'enregistrement de tous les signaux utiles dont la réception est postérieure à l'instant de référence et d'indiquer à chacun des appareils l'instant de référence à partir duquel les enregistrements effectués doivent être pris en compte.

Un mode de réalisation particulier et non limitatif du dispositif de mise en œuvre de la méthode est divulgué dans la revendication 2.

La méthode ainsi que le dispositif seront décrits ci-après en se référant aux dessins annexés sur lesquels:

– la fig. 1 représente un chronogramme du premier signal et du second signal émis successivement sur la voie de transmission,

– la fig. 2 représente un chronogramme du premier signal et du second signal à leur réception par l'appareil d'utilisation après un délai de propagation caractéristique de la voie de transmission utilisée,

– la fig. 3 représente le chronogramme des différents échantillons de signaux successivement enregistrés par les moyens d'enregistrement de l'appareil d'utilisation,

– la fig. 4 représente schématiquement un mode de réalisation du dispositif de mise en œuvre.

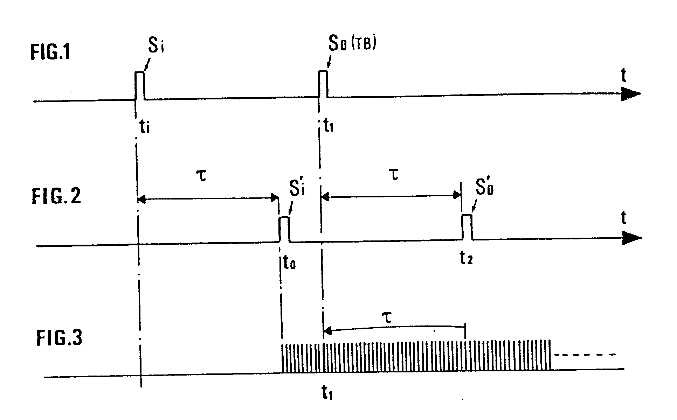

Sur le chronogramme de la fig. 1, l'instant $t_i$ désigne l'instant initial où un premier signal Si est émis sur une voie de transmission à bande étroite. Les appareils d'utilisation reçoivent le signal S'i (fig. 2) correspondant, à un instant $t_o$. L'intervalle de temps de propagation $\tau$ dépend de la bande passante de la voie de transmission et constitue une caractéristique connue de celle-ci. Si la bande passante est de 3 kHz par exemple, la capacité de la voie de transmission est de 300 bauds et, pour un signal Si de 12 bits par exemple, la durée de propagation le long de la voie sera de 36 ms.

Cet intervalle de temps constant $\tau$ est déterminé par des mesures préalables.

La réception du signal S'i correspondant par les appareils d'utilisation, déclenche l'acquisition par ceux-ci des différents signaux provenant des différents récepteurs de signaux auxquels ils sont connectés et l'enregistrement de ces différents signaux. Les signaux enregistrés à partir de l'instant $t_o$ et antérieurement à l'instant de référence correspondent essentiellement à des bruits de fond.

La phase d'acquisition étant commencée, on est assuré que tous les signaux utiles arrivant après l'instant de référence seront mémorisés au fur et à mesure de leurs arrivées et par conséquent disponibles sur les enregistrements.

A un instant $t_1$ postérieur à $t_o$, on transmet sur la voie de transmission un signal de référence So (fig. 1). L'instant $t_1$ correspond par exemple à l'instant TB où est déclenchée une source sismique et le signal de référence So constitue un ordre d'acquisition de signaux pour les différents appareils d'utilisation. Cet ordre est transmis sur la voie de transmission étroite et, après une durée de propagation $\tau$ caractéristique de celle-ci, les appareils d'acquisition détectent à un instant $t_2$ (fig. 2) un signal S'o.

Pour tenir compte du fait que la réception des signaux utiles, correspondant par exemple aux échos sur différents réflecteurs souterrains, d'un signal sismique transmis dans le sol par un générateur sismique à partir de l'instant $t_1$, commence avant l'instant $t_2$ de réception par l'appareil d'utilisation du signal So transmis à l'instant $t_1$ (TB), et que des signaux utiles sont par conséquent enregistrés avant cet instant $t_2$, on détermine sur le support d'enregistrement la position de départ où a été mémorisé le premier signal ou échantillon de signal utile en cherchant l'emplacement du support d'enregistrement qui a été rempli un intervalle de temps $\tau$ avant l'instant $t_2$, et on restitue alors tous les signaux ou échantillons de signaux mémorisés postérieurement à cet instant $t_2 - \tau$ (fig. 3).

L'ensemble des signaux utiles étant enregistré et disponible, tout se passe comme si l'intervalle de transmission des ordres était négligeable c'est-à-dire, comme si l'on disposait, pour la transmission des ordres d'un moyen de transmission à bande très étendue.

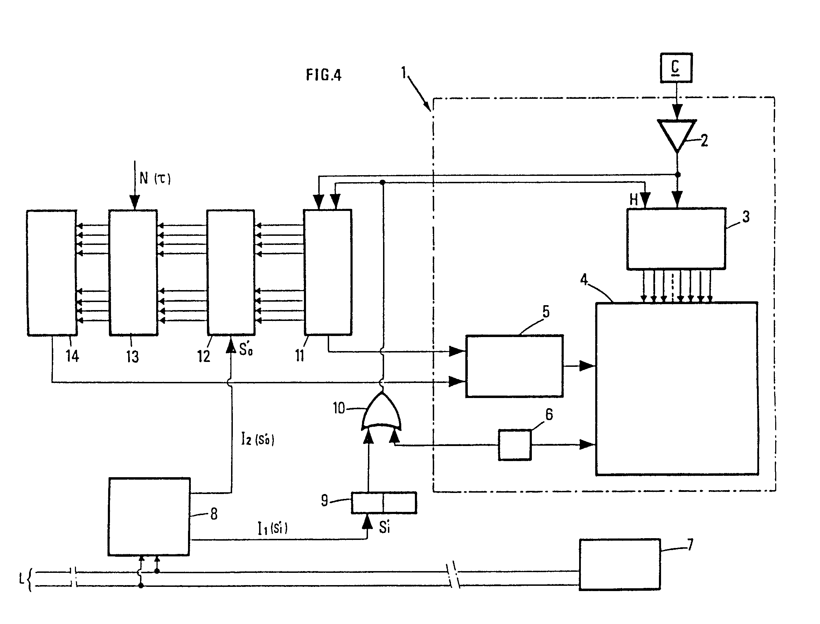

Le dispositif de mise en œuvre (fig. 4) est associé à des appareils d'utilisation comportant chacun un système d'enregistrement 1 de signaux produits par des moyens capteurs. Ce système comporte un amplificateur 2 adapté à échantillonner et amplifier les signaux captés dont l'entrée est connectée soit directement aux moyens capteurs dans le cas d'un capteur unique C, soit à la sortie d'un multiplexeur (non représenté) dont les différentes entrées sont elles-mêmes respectivement connectées aux moyens capteurs lorsque ceux-ci comportent une pluralité de capteurs. Le système d'enregistrement comporte aussi un convertisseur analogique-numérique 3 adapté à transformer les échantillons de signaux successifs amplifiés en «mots» numériques, dont l'entrée est connectée à la sortie de l'amplificateur 2, un organe de mémorisation 4 connecté aux sorties du convertisseur 3 et un élément d'adressage 5. L'enregistrement des mots numériques s'effectue séquentiellement aux emplacements de l'organe de mémorisation 4 successivement désignés par l'élément d'adressage 5. Le système d'enregistrement comporte en outre un élément horloge 6 qui engendre un signal impulsionnel H constituant une échelle de temps.

Le dispositif selon l'invention comporte un élément d'émission de signaux 7 et un élément de réception de signaux 8 connectés à une voie de transmission à bande étroite. Celle-ci peut être constituée d'un canal hertzien ou encore d'une ligne bifilaire L (cas représenté). L'élément de réception 8 est adapté à engendrer successivement deux impulsions $I_1$, $I_2$ en réponse à la réception sur la ligne L respectivement des signaux S'i et S'o retardés de l'intervalle de temps de propagation $\tau$ par rapport aux signaux Si et So transmis par l'élément d'émission 7. L'impulsion $I_1$ est appliquée à l'une des entrées d'un basculeur bistable 9 dont l'une des sorties est connectée à l'une des entrées d'une porte ET 10 à deux entrées, la seconde entrée de celle-ci étant connectée à la sortie de l'élément horloge 6.

La sortie de la porte ET 10 est connectée à l'entrée de comptage d'un compteur d'échantillons 11 ainsi qu'à l'entrée d'horloge du convertisseur analogique-numérique 3. L'entrée de validation du compteur 11 est connectée à la sortie de l'amplificateur 2.

Les bornes de sortie en parallèle du compteur d'échantillons 11 sont connectées aux entrées respectives d'un registre 12 adapté à reproduire à chaque instant le contenu du compteur et à le mémoriser lorsque le signal $I_2$ issu de l'élément de réception 7, est appliqué à son entrée d'activation. Les bornes de sortie en parallèle du registre 12 sont connectées aux entrées d'un soustracteur 13 adapté à soustraire du nombre mémorisé dans le registre 12 un nombre N prédéterminé.

Si T est la période du signal d'horloge, le nombre N choisi est tel que: $NT = \tau$     (1)

3

Les bornes de sortie du soustracteur 13 sont connectées à un élément de contrôle 14 adapté à mémoriser le mot binaire issu du soustracteur 13 jusqu'à la fin du cycle d'enregistrement de tous les échantillons successifs des signaux engendrés par le capteur C et à produire un signal permettant la commande de l'élément d'adressage 5 au début de la phase de restitution des données enregistrées. Une sortie du compteur 11, où est disponible un signal dont la période de récurrence est celle des échantillons issus du système d'amplification 2, est connectée à une entrée de commande de l'élément d'adressage 5.

Le dispositif fonctionne de la manière suivante:

– L'élément de réception 8 ayant détecté l'arrivée par la ligne L du signal S'i (fig. 2) engendre un signal $I_1$ qui actionne le basculeur bistable 9, lequel commande l'ouverture de la porte ET 10. Les impulsions d'horloge H engendrées par l'élément-horloge 6 sont transmises au convertisseur analogique-numérique 3, ce qui lui permet de convertir en mots numériques les échantillons amplifiés délivrés par l'amplificateur 2, ainsi qu'au compteur 11, lequel s'incrémente d'une unité à chaque fois qu'un nouvel échantillon est disponible à la sortie dudit amplificateur. Le compteur d'échantillons comptabilise de ce fait tous les échantillons amplifiés depuis l'instant $t_o$ (fig. 2) et actionne l'élément d'adressage 5 de manière que les échantillons successifs soient enregistrés à des adresses prédéterminées de l'organe de mémorisation 4.

– L'élément de réception 8 ayant détecté l'arrivée par la ligne L du signal S'o (fig. 2), commande par l'impulsion $I_2$ le blocage du registre 12 et la mémorisation du nombre d'échantillons $N_1$ reçus à l'instant $t_2$. Ce nombre $N_1$ étant transféré dans le soustracteur 13 est alors diminué du nombre N prédéterminé (relation 1) et le résultat, soit $(N_1-N)$, est mémorisé dans l'élément de contrôle 14 jusqu'à la fin du cycle d'enregistrement.

– Les premiers échantillons enregistrés à partir de l'instant $t_o$, c'est-à-dire antérieurement à l'arrivée au capteur C des signaux utiles, ne doivent pas être pris en compte au moment où l'on effectue le cycle de lecture des enregistrements. Aussi l'élément de contrôle 14 est adapté à commander l'élément d'adressage 5 de manière que le numéro d'ordre de la première adresse lue dans la série de toutes les adresses où ont été inscrits les échantillons successivement enregistrés dans l'organe de mémorisation 4, soit égal à $N_1-N_o$, cette première adresse correspondant à l'échantillon reçu à l'instant $t_2-\tau$ (fig. 3) c'est-à-dire à l'instant de référence $t_1$.

**Revendications**

1. Méthode pour la commande à distance d'appareils d'acquisition de signaux depuis un poste de commande éloigné au moyen d'une voie de transmission d'ordres à bande passante étroite dont le délai de transmission $\tau$ est prédéterminé, permettant l'acquisition de signaux reçus postérieurement à un instant de référence choisi $t_1$, caractérisée en ce qu'elle comporte la transmission sur ladite voie de transmission (L) d'un premier signal de commande (Si), à un instant initial $t_i$ précédant l'instant de référence d'un intervalle de temps au moins égal au délai de transmission $\tau$, la réception du premier signal de commande déclenchant l'acquisition desdits signaux reçus, la transmission sur ladite voie de transmission d'un second signal de commande (So) à l'instant de référence choisi $t_1$, ce second signal de commande étant reçu par les appareils d'acquisition à un instant ultérieur $t_2$ et la sélection parmi tous les signaux enregistrés par lesdits appareils d'acquisition, de tous ceux enregistrés à partir de l'instant $t_2-\tau$ et de ce fait postérieur à l'instant de référence choisi.

2. Dispositif pour la commande à distance d'appareils d'acquisition de signaux comportant des moyens d'échantillonnage, des moyens de numérisation et des moyens d'enregistrement desdits signaux, ces appareils étant commandés depuis un poste de commande éloigné, en utilisant une voie de transmission d'ordres à bande passante étroite (L) dont le délai de transmission $\tau$ est prédéterminé, permettant l'acquisition et l'enregistrement de signaux reçus postérieurement à un instant de référence $t_1$ choisi, caractérisé en ce qu'il comporte des moyens d'émission (7) sur la voie de transmission d'un premier signal de commande (Si) à un instant initial $t_i$ et d'un second signal de commande (So) audit instant de référence $t_1$, ces deux instants étant séparés par un intervalle de temps au moins égal audit délai de transmission $\tau$, un ensemble (8) de réception des signaux de commande transmis sur la voie de transmission (L), des moyens de comptage (11) des échantillons de signaux successivement enregistrés, des moyens de contrôle commandés par l'ensemble de réception (8) pour déclencher l'acquisition des signaux reçus et pour actionner les moyens de comptage (11), à la réception du premier signal de commande (Si) et des moyens pour commander la sélection des signaux enregistrés comportant des moyens (12) pour mémoriser le nombre d'échantillons enregistrés entre la réception du premier et du second signal de commande et des moyens (13) pour soustraire du nombre d'échantillons, un nombre dépendant du délai de transmission $\tau$ de la voie de transmission.

3. Dispositif selon la revendication 2, caractérisé en ce que lesdits appareils comportent des moyens d'enregistrement numériques (4) contrôlés par un élément d'adressage (5) lequel est commandé par les moyens de comptage (11), et un convertisseur analogique-numérique (3), la fréquence d'échantillonnage et la numérisation des signaux reçus dépendant de la fréquence d'un élément-horloge (6), et en ce qu'il comporte un élément (14) commandé par les moyens de soustraction (13) pour le contrôle de l'élément d'adressage (5).

4. Dispositif selon la revendication 3, caractérisé en ce que les moyens de contrôle comportent un basculeur bistable (9) pour mémoriser un signal provenant de l'ensemble de réception (8) en réponse à la réception du premier signal de commande, et une porte (10) commandée par le basculeur (9) pour contrôler l'application du signal délivré par l'élément d'horloge à l'élément de comptage (11) et au convertisseur analogique-numérique (3).

**Patentansprüche**

1. Verfahren zum Fernsteuern von Signalerfassungseinrichtungen von einer entfernten Steuerstation aus, mittels eines Befehlsübertragungsweges mit schmalem Passband, dessen Übertragungsverzögerung oder Übertragungszeit $\tau$ vorbestimmt ist, wodurch das Erfassen von Signalen möglich wird, die nach einem gewählten Bezugsaugenblick $t_1$ empfangen wurden, dadurch gekennzeichnet, dass auf diesem Übertragungsweg (L) ein erstes Steuersignal (Si) zu einem Anfangsaugenblick $t_i$ übertragen wird, der dem Bezugsaugenblick eines Zeitintervalls vorhergeht, welches wenigstens gleich der Übertragungsverzögerung $\tau$ ist, wobei der Empfang des ersten Steuersignals das Erfassen dieser empfangenen Signale auslöst, wobei die Übertragung eines zweiten Steuersignals (So) auf diesem Übertragungsweg im gewählten Bezugsaugenblick $t_1$ vorgenommen wird, wobei dieses zweite Steuersignal von den Erfassungseinrichtungen zu einem späteren Augenblick $t_2$ empfangen wird und dass unter den von diesen Erfassungseinrichtungen aufgezeichneten Signalen alle diejenigen ausgewählt werden, die vom Augenblick $t_2-\tau$ an und damit nach dem gewählten Bezugsaugenblick aufgezeichnet wurden.

2. Vorrichtung zur Fernsteuerung von Signalerfassungseinrichtungen mit Probennahmeeinrichtungen, Einrichtungen zum Digitalisieren sowie Einrichtungen zum Aufzeichnen dieser Signale, wobei diese Einrichtungen von einer entfernten Befehlsstation aus unter Verwendung eines Befehlsübertragungswegs mit engem Bandpass (L) gesteuert sind, dessen Übertragungsverzögerung $\tau$ vorbestimmt ist und das Erfassen und Aufzeichnen von Signalen ermöglicht, die nach einem gewählten Bezugsaugenblick $t_1$ empfangen wurden, gekennzeichnet durch Einrichtungen (7), um auf dem Übertragungsweg ein erstes Steuersignal (Si) zu einem Anfangsaugenblick $t_i$ und ein zweites Steuersignal (So) zu diesem Augenblick $t_1$ auszusenden, wobei diese beiden Augenblicke durch ein Zeitintervall getrennt sind, das wenigstens gleich dieser Übertragungsverzögerung $\tau$ ist, durch eine Anordnung (8) zum Empfang der auf dem Übertragungsweg (L) übertragenen Steuersignale, Zähleinrichtungen (11) für die nacheinander aufgezeichneten Probennahmesignale; Regeleinrichtungen, die von der Empfangsanordnung (8) gesteuert sind, um das Erfassen der empfangenen Signale auszulösen und um die Zähleinrichtungen (11) bei Empfang des ersten Steuersignals (Si) zu betätigen und mit Einrichtungen zum Steuern der Auswahl der aufgezeichneten Signale mit Einrichtungen (12) zum Speichern der Anzahl von Proben, die zwischen dem Empfang des ersten und des zweiten Steuersignals aufgezeichnet wurden; sowie Einrichtungen (13), um von der Probenzahl eine Zahl abzuziehen, die von der Übertragungsverzögerung $\tau$ des Übertragungsweges abhängt.

3. Vorrichtung nach Anspruch 2, dadurch gekennzeichnet, dass diese Einrichtungen numerische Aufzeichnungseinrichtungen (4) umfassen, die von einem Adressenelement (5) geregelt sind, welches durch die Zähleinrichtungen (11) gesteuert ist sowie einem Analogdigitalkonverter (3), wobei die Probennahmefrequenz und die Digitalisierung der empfangenen Signale abhängen von der Frequenz eines Taktgeberelements (6) und dass ein Element (14) vorgesehen ist, welches durch die Substraktionseinrichtungen (13) für die Regelung des Adressenelements (5) gesteuert wird.

4. Vorrichtung nach Anspruch 3, dadurch gekennzeichnet, dass die Regeleinrichtungen eine bistabile Kippschaltung (9) umfassen, um ein Signal zu speichern, das aus der Empfangsanordnung (8) abhängig vom Empfang des ersten Steuersignals stammt; und durch ein von der Kippschaltung (9) gesteuertes Gatter (10), das das Anlegen des vom Taktgeberelement gelieferten Signals an das Zählelement (11) und an den Analogdigitalkonverter (3) regelt.

**Claims**

1. A method for the remote control of signal acquisition apparatus from a distant control station by means of an order transmission channel with narrow pass band whose transmission delay $\tau$ is predetermined, for the acquisition of signals received subsequent to a chosen reference time $t_1$, characterized in that it comprises transmission over said transmission channel (L) of a first control signal (Si) at an initial time $t_i$ preceding the reference time by a time interval at least equal to the transmission delay $\tau$, reception of the first control signal initiating acquisition of said signals received, the transmission over said transmission channel of a second control signal (So) at the chosen time reference time $t_1$, this second control signal being received by the acquisition apparatus at a subsequent time $t_2$ and selection among all the signals recorded by said acqusition apparatus of all those recorded from the time $t_2-\tau$ and therefore subsequent to the chosen reference time.

2. A device for the remote control of signal acquisition apparatus including sampling means, digitization means and means for recording said signals, these apparatus being controlled from a distant control station, using an order transmission channel with narrow pass band (L) whose transmission delay $\tau$ is predetermined, for the acquisition and recording of signals received subsequent to a chosen reference time $t_1$, characterized in that it includes means (7) for transmitting a first control signal (Si) over the transmission channel at an initial time $t_i$, and a second control signal (So) at said reference time $t_1$, these two times being separated by a time interval at least equal to said transmission delay $\tau$, an assembly (8) for receiving the control signals transmitted over the transmission channel (L), means (11) for counting the successively recorded signal samples, control means controlled by the reception assembly (8) for initiating acquisition of the signals received and for actuating the counting means (11) on reception of the first control signal (Si) and a means for controlling the selection of the recorded signals including means (12) for storing the number of samples recorded between reception of the first and of the second control signal and means (13) for deducting from the number of samples a number dependent on the transmission delay of the transmission channel.

3. Device according to claim 2, characterized in that said apparatus include digital recording means (4) controlled by an addressing element (5) which is controlled by the counting means (11), and an analog-digital converter (3), the sampling frequency and the digitization of the signals received depending on the frequency of a clock element (6), and in that it includes an element (14) controlled by the subtraction means (13) for controlling the addressing element (3).

4. Device according to claim 3, characterized in that the control means include a bistable flip flop (9) for storing a signal coming from the reception assembly (8) in response to the reception of the first control signal, and a gate (10) controlled by the flip flop (9) for controlling the application of the signal delivered by the clock element to the counting element (11) and to the analog-digital converter (3).

FIG.1

$S_i$

$S_0$ (TB)

t

$t_i$

$t_1$

FIG.2

$\tau$

$S_i'$

$\tau$

$S_0'$

t

$t_0$

$t_2$

FIG.3

$\tau$

$t_1$

**FIG.4**